# EUROPÄISCHE PATENTANMELDUNG

(11) **EP 4 837 423 A1**
(43) Veröffentlichungstag der Anmeldung: **11.11.2026**
(21) Anmeldenummer: 26174668.9
(22) Anmeldetag: 27.04.2026
(51) Int. Cl.: A23B 2/05, A23B 2/00

(54) **VORRICHTUNG UND VERFAHREN ZUM STERILISIEREN EINES PRODUKTS, INSBESONDERE EINES LEBENSMITTELPRODUKTS**

(30) Priorität: 08.05.2025 DE 102025117679
(71) Anmelder: MASCHINENBAU SCHOLZ GMBH & CO. KG, 48653 Coesfeld (DE)
(72) Erfinder: Herrmann, Martin, 48653 Coesfeld (DE); Graeber, Matthias, 48653 Coesfeld (DE)
(74) Vertreter: Hauck Patent- und Rechtsanwälte PartmbB

(57) **Zusammenfassung**

Die Erfindung betrifft eine Vorrichtung zum Sterilisieren eines Produkts, insbesondere eines Lebensmittelprodukts, gekennzeichnet durch eine Sterilisationskammer und einen Heißfluidspeicher, die über eine erste Fluidleitung miteinander verbunden sind, so dass durch die erste Fluidleitung heißes Fluid aus dem Heißfluidspeicher in die Sterilisationskammer geleitet werden kann, einen ersten Wärmetauscher, durch dessen erste Seite eine mit einem Einlass und einem Auslass der Sterilisationskammer verbundene zweite Fluidleitung verläuft, und durch dessen zweite Seite eine mit einer Heizeinrichtung verbundene dritte Fluidleitung verläuft, einen Warmfluidspeicher und einen zweiten Wärmetauscher, durch dessen erste Seite eine mit dem Einlass und dem Auslass der Sterilisationskammer verbundene vierte Fluidleitung verläuft, und durch dessen zweite Seite eine mit dem Warmfluidspeicher und dem Heißfluidspeicher verbundene fünfte Fluidleitung verläuft. Die Erfindung umfasst auch ein entsprechendes Verfahren.

## Beschreibung

Die Erfindung betrifft eine Vorrichtung und ein Verfahren zum Sterilisieren eines Produkts, insbesondere eines Lebensmittelprodukts.

Beispielsweise Lebensmittelprodukte werden in Sterilisationskammern, bei denen es sich beispielsweise um Autoklaven handeln kann, unter hoher Temperatur sterilisiert. Zum Sterilisieren wird ein Heißfluid, beispielsweise Heißwasser und/oder Heißdampf, eingesetzt. Zum Erhitzen des Heißfluids und zum Heißhalten während des Sterilisationsprozesses muss eine erhebliche Energiemenge bereitgestellt werden. Nach Abschluss des Sterilisationsprozesses muss das Produkt in der Sterilisationskammer in ebenfalls energieintensiver Weise wieder abgekühlt werden. Darüber hinaus weisen bestehende Vorrichtungen und Verfahren zum Sterilisieren von Produkten einen großen Wasserbedarf auf.

Aus DE 10 2013 202 188 A1 sind eine Vorrichtung und ein Verfahren zum Sterilisieren von Produkten mit Heißwasser und/oder Heißdampf bekannt. Die Sterilisationsvorrichtung umfasst einen primären, an eine Kammer zum Sterilisieren von Produkten angeschlossenen Fluidkreislauf zum Beaufschlagen der Kammer mit Heißwasser und/oder Heißdampf sowie einen sekundären Fluidkreislauf zum Erwärmen und/oder Kühlen des primären Kühlkreislaufs. Der sekundäre Fluidkreislauf steht über einen Wärmetauscher mit dem primären Fluidkreislauf in thermischer Verbindung. Außerdem ist im sekundären Fluidkreislauf ein Schichtspeichertank mit mehreren Temperaturzonen vorgesehen, die mit Fluid des sekundären Fluidkreislaufes separat be- und entladbar sind. Durch diese Ausgestaltung sollen sowohl beim Kühlen als auch beim Heizen des Fluids für die Kammer zum Sterilisieren Energieeinsparungen möglich sein. Der Aufbau mit dem Schichtspeichertank ist allerdings konstruktiv aufwendig und sehr empfindlich gegen innere Turbulenzen. Der Prozess innerhalb eines Autoklaven erfordert einen Volumenstrom von bis zu einigen hundert m³/h. Die Bildung von Wärmeschichtungen in dem Schichtspeicher wird dadurch gestört. Außerdem weist auch diese Vorrichtung noch einen erheblichen Energie- und Wasserverbrauch auf.

Ausgehend von dem erläuterten Stand der Technik liegt der Erfindung die Aufgabe zugrunde, eine Vorrichtung und ein Verfahren der eingangs genannten Art bereitzustellen, mit denen der Energie- und Fluidverbrauch in konstruktiv einfacher Weise weiter verringert werden kann.

Die Erfindung löst die Aufgabe durch die unabhängigen Ansprüche 1 und 12. Vorteilhafte Ausgestaltungen finden sich in den abhängigen Ansprüchen, der Beschreibung und den Figuren.

Für eine Vorrichtung der eingangsgenannten Art löst die Erfindung die Aufgabe durch:
- eine Sterilisationskammer und einen Heißfluidspeicher, die über eine erste Fluidleitung miteinander verbunden sind, so dass durch die erste Fluidleitung heißes Fluid aus dem Heißfluidspeicher in die Sterilisationskammer geleitet werden kann,
- einen ersten Wärmetauscher, durch dessen erste Seite eine mit einem Einlass und einem Auslass der Sterilisationskammer verbundene zweite Fluidleitung verläuft, und durch dessen zweite Seite eine mit einer Heizeinrichtung verbundene dritte Fluidleitung verläuft,
- einen Warmfluidspeicher und einen zweiten Wärmetauscher, durch dessen erste Seite eine mit dem Einlass und dem Auslass der Sterilisationskammer verbundene vierte Fluidleitung verläuft, und durch dessen zweite Seite eine mit dem Warmfluidspeicher und dem Heißfluidspeicher verbundene fünfte Fluidleitung verläuft.

Die Sterilisationskammer kann insbesondere ein Autoklav sein. Das in der erfindungsgemäßen Vorrichtung bzw. bei dem erfindungsgemäßen Verfahren genutzte Fluid kann ein Gas oder eine Flüssigkeit sein. Es kann sich zum Beispiel um Wasser und/oder Wasserdampf handeln. In einigen oder allen Fluidleitungen der erfindungsgemäßen Vorrichtung kann mindestens ein Ventil und/oder mindestens eine Pumpe angeordnet sein. Als Ventile können steuerbare Ventile zum Einsatz kommen, mit denen ein Durchfluss durch die jeweilige Fluidleitung gesperrt oder freigegeben werden kann. Die Freigabe kann bei steuerbaren Ventilen auch das Zulassen unterschiedlicher Durchflussquerschnitte umfassen. Mittels solcher Ventile und/oder Pumpen, beispielsweise drehzahlgeregelter Pumpen, können die an die verschiedenen Fluidleitungen der angeschlossenen Komponenten wahlweise miteinander verbunden oder voneinander getrennt werden. Dies kann, wie nachfolgend erläutert, durch eine Steuereinrichtung erfolgen.

Die erfindungsgemäße Vorrichtung weist neben der Sterilisationskammer, die das zu sterilisierende Produkt regelmäßig in geeigneten Haltern oder Trägern aufnimmt, einen Heißfluidspeicher und einen Warmfluidspeicher auf. Das in dem Heißfluidspeicher enthaltene Fluid weist eine höhere Temperatur auf als das in dem Warmfluidspeicher enthaltene Fluid. Der Heißfluidspeicher ist zu Beginn eines Sterilisationsprozesses mit heißem Fluid, beispielsweise heißem Wasser, befüllt. Über die erste Fluidleitung kann dieses Heißfluid aus dem Heißfluidspeicher zur Einleitung des Sterilisationsprozesses in die Sterilisationskammer geleitet werden. Wie nachfolgend näher erläutert, wird das in die Sterilisationskammer eingeleitete Heißfluid nachfolgend über eine zweite Fluidleitung durch eine erste Seite eines ersten Wärmetauschers zirkuliert. Die zweite Seite des ersten Wärmetauschers ist mit einer Heizeinrichtung verbunden, so dass das durch den Wärmetauscher geleitete Heißfluid während des Sterilisationsprozesses auf die für die Sterilisation erforderliche Temperatur geheizt und auf dieser gehalten wird. Beispielsweise kann das in dem Heißfluidspeicher enthaltene Heißfluid vor Einleiten in die Sterilisationskammer eine Temperatur von etwa 100°C oder mehr als 100°C aufweisen. Die Prozesstemperatur des Heißfluids während des Sterilisationsprozesses liegt mindestens bei diesem Wert, kann jedoch auch höher liegen, beispielsweise bei etwa 110°C oder über 110°C. Das durch die Heizeinrichtung über die dritte Fluidleitung durch den ersten Wärmetauscher geleitete Heizfluid kann beispielsweise vor Eintritt in den ersten Wärmetauscher dampfförmig sein. Beispielsweise kann es sich um Wasserdampf handeln. Im ersten Wärmetauscher bzw. stromab des ersten Wärmetauschers kann es zu einem Kondensieren des Heizfluids kommen. Das dabei anfallende Kondensat kann der Heizeinrichtung wieder zugeführt werden. Bei der Heizeinrichtung kann es sich beispielsweise um einen Dampferzeuger handeln.

Wie bereits erläutert, weist das in dem Warmfluidspeicher enthaltene Fluid eine geringere Temperatur auf als das in dem Heißfluidspeicher enthaltene Fluid. Insbesondere besitzt das in dem Warmfluidspeicher enthaltene Fluid eine niedrigere Temperatur als die Prozesstemperatur des Fluids in der Sterilisationskammer während einer Sterilisation. Durch den erfindungsgemäß vorgesehenen zweiten Wärmetauscher, durch dessen erste Seite eine mit dem Einlass und dem Auslass der Sterilisationskammer verbundene vierte Fluidleitung verläuft, so dass das in der Sterilisationskammer enthaltene Fluid nach Abschluss eines Sterilisationsprozesses über die vierte Fluidleitung durch den zweiten Wärmetauscher zirkuliert werden kann, ist ein Abkühlen des Fluids in der Sterilisationskammer nach Abschluss des Sterilisationsprozesses möglich. Hierzu kann das in dem Warmfluidspeicher enthaltene Fluid über die fünfte Fluidleitung durch die zweite Seite des zweiten Wärmetauschers geleitet werden, so dass das in der Sterilisationskammer enthaltene Fluid im Zuge der Zirkulation durch den zweiten Wärmetauscher einen Teil seiner Wärmeenergie an das Warmfluid aus dem Warmfluidspeicher abgibt. Indem die fünfte Fluidleitung außerdem mit dem Heißfluidspeicher verbunden ist, ist es weiter möglich, das in diesem Zuge erwärmte Fluid aus dem Warmfluidspeicher wieder dem auf einer höheren Temperatur liegenden Heißfluidspeicher zuzuführen.

Die erfindungsgemäße Ausgestaltung erlaubt eine Reduzierung des Fluid- bzw. Wasserverbrauchs, indem größere Mengen des Prozessfluids, insbesondere Wassers, zirkuliert und weiterverwendet werden können. Außerdem wird durch die erfindungsgemäße Ausgestaltung mit Heißfluidspeicher, Warmfluidspeicher und Wärmetauschern der Energiebedarf weiter reduziert.

Grundsätzlich ist es denkbar, dass der erste Wärmetauscher und der zweite Wärmetauscher durch einen gemeinsamen Wärmetauscher gebildet sind. Die zweite Fluidleitung und die vierte Fluidleitung können durch eine gemeinsame Fluidleitung gebildet sein. Bei dieser Ausgestaltung wird also ein kombinierter Wärmetauscher zum Heizen und Kühlen eingesetzt. Es besteht dann keine hydraulische Trennung von Kühlfluid und Heizfluid.

Nach einer bevorzugten Ausgestaltung, bei der auch eine hydraulische Trennung von Kühlfluid und Heizfluid vorliegt, kann jedoch vorgesehen sein, dass der erste Wärmetauscher und der zweite Wärmetauscher durch separate Wärmetauscher gebildet sind. Die zweite und vierte Fluidleitung können separate Fluidleitungen sein. Sie können miteinander verbunden sein, insbesondere im Bereich der Verbindung mit dem Ein- und Auslass der Sterilisationskammer.

Für ein Verfahren der eingangs genannten Art löst die Erfindung die Aufgabe durch die Schritte:
- in einem Flutungsschritt wird eine Sterilisationskammer mit Fluid aus einem Heißfluidspeicher geflutet,
- in einem Sterilisationsschritt wird das in der Sterilisationskammer befindliche Fluid über einen Einlass und einen Auslass der Sterilisationskammer durch eine erste Seite eines ersten Wärmetauschers zirkuliert, und durch eine Heizeinrichtung geheiztes Fluid durch eine zweite Seite des ersten Wärmetauschers zirkuliert, so dass das in der Sterilisationskammer befindliche Fluid im ersten Wärmetauscher geheizt und insbesondere auf der geheizten Temperatur gehalten wird,
- in einem ersten Kühlschritt wird das in der Sterilisationskammer befindliche Fluid durch den Einlass und den Auslass der Sterilisationskammer durch die erste Seite des zweiten Wärmetauschers zirkuliert, und Fluid aus einem Warmfluidspeicher durch die zweite Seite des zweiten Wärmetauschers in einen Heißfluidspeicher geleitet, so dass das in der Sterilisationskammer befindliche Fluid im zweiten Wärmetauscher gekühlt wird,
- in einem zweiten Kühlschritt wird das in der Sterilisationskammer befindliche Fluid weiterhin durch den Einlass und Auslass der Sterilisationskammer durch die erste Seite des zweiten Wärmetauschers zirkuliert, und Fluid aus dem Heißfluidspeicher über einen Einlass und einen Auslass des Heißfluidspeichers durch die zweite Seite des zweiten Wärmetauschers zirkuliert, so dass das in der Sterilisationskammer befindliche Fluid im zweiten Wärmetauscher weiter gekühlt wird.

Die erfindungsgemäße Vorrichtung kann entsprechend weiterhin eine Steuereinrichtung umfassen, die dazu ausgebildet ist, folgende Schritte zum Sterilisieren eines Produkts auszuführen:
- in einem Flutungsschritt mindestens ein Ventil und/oder mindestens eine Pumpe so anzusteuern, dass die Sterilisationskammer durch die erste Fluidleitung mit Fluid aus dem Heißfluidspeicher geflutet wird,
- in einem Sterilisationsschritt mindestens ein Ventil und/oder mindestens eine Pumpe so anzusteuern, dass das in der Sterilisationskammer befindliche Fluid über den Einlass und den Auslass der Sterilisationskammer und die zweite Fluidleitung durch die erste Seite des ersten Wärmetauschers zirkuliert wird, und dass durch die Heizeinrichtung geheiztes Fluid durch die dritte Fluidleitung durch die zweite Seite des ersten Wärmetauschers zirkuliert wird, so dass das in der Sterilisationskammer befindliche Fluid im ersten Wärmetauscher geheizt und insbesondere auf der geheizten Temperatur gehalten wird,
- in einem ersten Kühlschritt mindestens ein Ventil und/oder mindestens eine Pumpe so anzusteuern, dass das in der Sterilisationskammer befindliche Fluid durch den Einlass und den Auslass der Sterilisationskammer und die vierte Fluidleitung durch die erste Seite des zweiten Wärmetauscher zirkuliert wird, und dass Fluid aus dem Warmfluidspeicher durch die fünfte Fluidleitung und die zweite Seite des zweiten Wärmetauschers in den Heißfluidspeicher geleitet wird, so dass das in der Sterilisationskammer befindliche Fluid im zweiten Wärmetauscher gekühlt wird,
- in einem zweiten Kühlschritt mindestens ein Ventil und/oder mindestens eine Pumpe so anzusteuern, dass das in der Sterilisationskammer befindliche Fluid weiterhin durch den Einlass und Auslass der Sterilisationskammer und die vierte Fluidleitung durch die erste Seite des zweiten Wärmetauschers zirkuliert wird, und dass Fluid aus dem Heißfluidspeicher über einen Einlass und einen Auslass des Heißfluidspeichers durch die fünfte Fluidleitung und die zweite Seite des zweiten Wärmetauschers zirkuliert wird, so dass das in der Sterilisationskammer befindliche Fluid im zweiten Wärmetauscher weiter gekühlt wird.

Im Flutungsschritt wird, wie eingangs erläutert, die Sterilisationskammer mit Heißfluid aus dem Heißfluidspeicher überflutet. In dem Sterilisationsschritt wird, wie ebenfalls eingangs erläutert, die Sterilisationskammer über die Heizeinrichtung indirekt, insbesondere mit Dampf, auf die Prozesstemperatur aufgeheizt bzw. auf der Prozesstemperatur gehalten. Im ersten Kühlschnitt wird Warmfluid aus dem Warmfluidspeicher entnommen und über den zweiten Wärmetauscher in den zuvor entladenen Heißfluidspeicher geleitet. Die Abwärme der Sterilisationskammer heizt das Warmfluid in dem zweiten Wärmetauscher auf ein nächsthöheres Temperaturniveau, während die Sterilisationskammer gekühlt wird. Auf diese Weise kann der Energiebedarf beim Kühlen und Heizen für einen nachfolgenden Sterilisationsprozess verringert werden. Da das in den Heißfluidspeicher übergeleitete Warmfluid in dem ersten Kühlschritt regelmäßig noch nicht die optimale Wärmemenge über den zweiten Wärmetauscher hat aufnehmen können, wird es in dem zweiten Kühlschritt noch mehrfach über den zweiten Wärmetauscher umgewälzt bis zum Erreichen einer minimal möglichen Temperaturspreizung zwischen dem Fluid im Heißfluidspeicher und der Sterilisationskammer. Auf diese Weise kann die in dem System vorhandene Energie optimal zur Minimierung extern zugeführter Energie genutzt werden.

Die erfindungsgemäße Vorrichtung kann weiterhin einen Brauchfluidspeicher umfassen, der über eine sechste Fluidleitung mit der zweiten Seite des zweiten Wärmetauschers verbunden ist.

Die Steuereinrichtung kann weiter dazu ausgebildet sein, in einem dritten Kühlschritt mindestens ein Ventil und/oder mindestens eine Pumpe so anzusteuern, dass das in der Sterilisationskammer befindliche Fluid weiterhin durch den Einlass und den Auslass der Sterilisationskammer und die vierte Fluidleitung durch die erste Seite des zweiten Wärmetauschers zirkuliert wird, und dass Brauchfluid aus dem Brauchfluidspeicher über die sechste Fluidleitung durch die zweite Seite des zweiten Wärmetauschers und in den Warmfluidspeicher geleitet wird, so dass das in der Sterilisationskammer befindliche Fluid im zweiten Wärmetauscher weiter gekühlt wird.

Bei dem erfindungsgemäßen Verfahren kann entsprechend vorgesehen sein, dass in einem dritten Kühlschritt das in der Sterilisationskammer befindliche Fluid weiterhin durch den Einlass und den Auslass der Sterilisationskammer durch die erste Seite des zweiten Wärmetauschers zirkuliert wird, und dass Brauchfluid aus einem Brauchfluidspeicher durch die zweite Seite des zweiten Wärmetauschers und in den Warmfluidspeicher geleitet wird, so dass das in der Sterilisationskammer befindliche Fluid im zweiten Wärmetauscher weiter gekühlt wird.

In dem dritten Kühlschritt wird warmes Brauchfluid über den zweiten Wärmetauscher von dem Brauchfluidspeicher in den Warmfluidspeicher gegeben, wobei die Sterilisationskammer über den zweiten Wärmetauscher weiter gekühlt wird. Der Warmfluidspeicher wird über den Brauchfluidspeicher, und gegebenenfalls über einen nachfolgend näher erläuterten Kühlfluidspeicher, mit frischem Fluid befüllt. Durch diese Ausgestaltung kann eine weitere Reduzierung des Energie- und Fluidbedarfs erreicht werden.

Die Steuereinrichtung kann nach einer weiteren Ausgestaltung dazu ausgebildet sein, in einem vierten Kühlschritt mindestens ein Ventil und/oder mindestens eine Pumpe so anzusteuern, dass das in der Sterilisationskammer befindliche Fluid weiterhin durch den Einlass und den Auslass der Sterilisationskammer und die vierte Fluidleitung durch die erste Seite des zweiten Wärmetauschers zirkuliert wird, und dass Fluid aus dem Warmfluidspeicher über einen Einlass und einen Auslass des Warmfluidspeichers durch die fünfte Fluidleitung und die zweite Seite des zweiten Wärmetauschers zirkuliert wird, so dass das in der Sterilisationskammer befindliche Fluid im zweiten Wärmetauscher weiter gekühlt wird.

Bei dem erfindungsgemäßen Verfahren kann entsprechend vorgesehen sein, dass in einem vierten Kühlschritt das in der Sterilisationskammer befindliche Fluid weiterhin durch den Einlass und den Auslass der Sterilisationskammer und die vierte Fluidleitung durch die erste Seite des zweiten Wärmetauschers zirkuliert wird, und dass Fluid aus dem Warmfluidspeicher über einen Einlass und einen Auslass des Warmfluidspeichers durch die zweite Seite des zweiten Wärmetauschers zirkuliert wird, so dass das in der Sterilisationskammer befindliche Fluid im zweiten Wärmetauscher weiter gekühlt wird.

Im vierten Kühlschritt wird die in der Sterilisationskammer vorhandene Nachwärme genutzt, um das in dem Warmfluidspeicher enthaltene Fluid weiter aufzuwärmen und gleichzeitig die Sterilisationskammer weiter zu kühlen. Wiederum hat das in den Warmfluidspeicher übergeleitete Fluid in den vorangegangenen Kühlschritten regelmäßig noch nicht die optimale Wärmemenge über den zweiten Wärmetauscher aufnehmen können. Es wird daher noch mehrfach über den zweiten Wärmetauscher umgewälzt, bis eine minimale Temperaturspreizung zwischen dem Warmfluidspeicher und der Sterilisationskammer erreicht ist.

Die erfindungsgemäße Vorrichtung kann weiterhin einen Kühlfluidspeicher umfassen, der über eine Wärmepumpe mit dem Brauchfluidspeicher verbunden ist, wobei der Kühlfluidspeicher mit der sechsten Fluidleitung verbunden ist. Die Wärmepumpe kann kontinuierlich Wärme aus dem Kühlfluidspeicher als Wärmequelle in den Brauchfluidspeicher als Wärmesenke bringen. Der Kühlfluidspeicher kann über eine Zuführung mit einer Kühlfluidversorgung verbunden sein, über die ein beispielsweise mit einer Temperatur von unter 20°C, vorzugweise unter 15°C versehenes Kühlfluid, wie Brunnenwasser, zugeführt werden kann.

Die Steuereinrichtung kann entsprechend weiter dazu ausgebildet sein, in einem fünften Kühlschritt mindestens ein Ventil und/oder mindestens eine Pumpe so anzusteuern, dass das in der Sterilisationskammer befindliche Fluid weiterhin durch den Einlass und den Auslass der Sterilisationskammer und die vierte Fluidleitung durch die erste Seite des zweiten Wärmetauschers zirkuliert wird, und dass Kühlfluid aus dem Kühlfluidspeicher über einen Einlass und einen Auslass des Kühlfluidspeichers durch die fünfte Fluidleitung und die zweite Seite des zweiten Wärmetauschers zirkuliert wird, so dass das in der Sterilisationskammer befindliche Fluid im zweiten Wärmetauscher weiter gekühlt wird.

Entsprechend kann bei dem erfindungsgemäßen Verfahren vorgesehen sein, dass in einem fünften Kühlschritt das in der Sterilisationskammer befindliche Fluid weiterhin durch den Einlass und den Auslass der Sterilisationskammer und die vierte Fluidleitung durch die erste Seite des zweiten Wärmetauschers zirkuliert wird, und dass Kühlfluid aus einem Kühlfluidspeicher über einen Einlass und einen Auslass des Kühlfluidspeichers durch die zweite Seite des zweiten Wärmetauschers zirkuliert wird, so dass das in der Sterilisationskammer befindliche Fluid im zweiten Wärmetauscher weiter gekühlt wird.

Bei dem fünften Kühlschritt, bei dem es sich um einen finalen Kühlschritt des Sterilisationsprozesses handeln kann, wird kaltes Fluid aus dem Kühlfluidspeicher kontinuierlich über die zweite Seite des zweiten Wärmetauschers umgewälzt, so dass das Kühlfluid über den zweiten Wärmetauscher Wärme aus dem in der Sterilisationskammer enthaltenen Fluid aufnimmt, das entsprechend abgekühlt wird. Durch das wie erläutert auf einer niedrigen Temperatur befindliche Kühlfluid wird die Sterilisationskammer auf diese Weise auf eine für das Prozessende vorgesehene Endtemperatur gekühlt. Diese kann beispielsweise in einem Bereich von weniger als 30°C liegen.

Beispielsweise parallel zu dem fünften Kühlschritt kann das bereits stark erwärmte Fluid im Heißfluidspeicher über eine Heizeinrichtung, beispielsweise direkt mit Dampf, soweit erforderlich auf die für einen erneuten Prozessstart erforderliche Flutungstemperatur aufgeheizt werden. Das so erhitzte Fluid kann dann unmittelbar für einen nachfolgenden Sterilisationsprozess eingesetzt werden. Die dafür notwendige extern zugeführte Energiemenge kann erfindungsgemäß minimiert werden.

Der Kühlfluidspeicher und der Brauchfluidspeicher können weiterhin über eine siebte Fluidleitung miteinander verbunden sein. Die Steuereinrichtung kann dazu ausgebildet sein, nach dem fünften Kühlschritt mindestens ein Ventil und/oder mindestens eine Pumpe so anzusteuern, dass durch den zweiten Wärmetauscher in dem fünften Kühlschritt erwärmtes Kühlfluid über die siebte Fluidleitung aus dem Kühlfluidspeicher in den Brauchfluidspeicher geleitet wird. Entsprechend kann bei dem erfindungsgemäßen Verfahren vorgesehen sein, dass nach dem fünften Kühlschritt durch den zweiten Wärmetauscher in dem fünften Kühlschritt erwärmtes Kühlfluid aus dem Kühlfluidspeicher in den Brauchfluidspeicher geleitet wird.

Das aus dem Kühlfluidspeicher abgeführte Fluid kann über die Kühlfluidversorgung durch nachgefülltes frisches Kühlfluid, beispielsweise Brunnenwasser, ersetzt werden. Das aus dem Kühlfluidspeicher in den Brauchfluidspeicher übergeleitete Fluid ist durch den fünften Kühlschritt bereits vorgewärmt. Wie zuvor erläutert, dient der Kühlfluidspeicher über die Wärmepumpe gleichzeitig als Wärmequelle für das in dem Brauchfluidspeicher enthaltene Fluid. Das auf diese Weise stark erwärmte Brauchfluid, insbesondere Brauchwasser, kann zur weiteren Verwendung kontinuierlich oder diskontinuierlich aus dem Brauchfluidspeicher entnommen werden, beispielsweise für Reinigungsarbeiten nach einem Prozess- bzw. Schichtende. Die im Rahmen der verschiedenen Kühlschritte erzeugte Abwärme aus der Sterilisationskammer wird somit, soweit sie nicht in der erfindungsgemäßen Vorrichtung direkt über den Warmfluidspeicher und den Heißfluidspeicher wiederverwendet werden kann, über den Brauchfluidspeicher ebenfalls einer weiteren Nutzung zugeführt. Nicht mehr nutzbares Abwasser kann mit der Erfindung auf ein Minimum reduziert werden. So beschränkt sich die durch das zu sterilisierende Produkt gegebenenfalls kontaminierte Menge an Prozessfluid auf die für den Prozess selbst erforderliche Mindestmenge. Damit kann der Wasserverbrauch minimiert werden. Insbesondere wird die erforderliche Wassermenge auf eine für den Sterilisationsprozess erforderliche Prozesswassermenge begrenzt, so dass Wasser und Energie gespart werden können. Energie wird zum schrittweisen Anwärmen des Prozessfluids nach vorangegangenen Prozessschritten gegebenenfalls mehrfach gepuffert und für den jeweils nächsten Prozessschritt verwendet. Es erfolgt somit eine Reintegration der Energie. Kaltes und gegebenenfalls kontaminiertes Prozessfluid kann über einen Abfluss abgeführt werden.

Nach einer weiteren Ausgestaltung kann die fünfte Fluidleitung mit einer externen Kühleinrichtung verbunden sein. Die externe Kühleinrichtung dient zum Kühlen des Fluids in der Sterilisationskammer und damit zum Kühlen der Sterilisationskammer über den zweiten Wärmetauscher, sofern über die erfindungsgemäßen Systeme, beispielsweise den Brauchfluidspeicher, nicht ausreichend warmes Brauchfluid entnommen werden kann. Die Abwärme kann dann über das externe Kühlsystem abgeführt werden.

Das erfindungsgemäße Verfahren kann mit einer erfindungsgemäßen Vorrichtung ausgeführt werden. Entsprechend kann die erfindungsgemäße Vorrichtung zur Durchführung des erfindungsgemäßen Verfahrens ausgebildet sein.

Zusammenfassend durchläuft das Prozessfluid gemäß der Erfindung verschiedene Stationen, nämlich aus einer Kühlfluidversorgung als Kühlfluid zu einem Brauchfluid, zu einem Warmfluid, zu einem Heißfluid in die Sterilisationskammer, und, soweit nicht benötigt, in einen Abfluss. Aus dem Warmfluidspeicher kann eine Entnahme von Warmfluid erfolgen, das einem weiteren Gebrauch zugeführt werden kann. Die Erfindung ermöglicht somit eine Reduzierung des Wasserverbrauchs, eine Nutzung der Abwärme für einen nachfolgenden Prozess sowie für ein Brauchfluid, wie zum Beispiel ein Reinigungsfluid. Trinkwasser kann als Prozessfluid eingesetzt werden, damit eine Rekontamination des Produkts nicht erfolgen kann. So besteht ein grundsätzliches Kontaminationsrisiko über von außen eingebrachtes Wasser. Durch den Einsatz frischen Wassers kann dieses Risiko minimiert werden. Kontaminiertes Abwasser wird minimiert und sauberes Kondensat kann beispielsweise als Speisewasser rückgeführt werden.

In den oben genannten Ausgestaltungen und in den nachfolgenden Ausführungsbeispielen wird zur Vereinfachung die Erfindung im Zusammenhang mit einer einzelnen Sterilisationskammer und entsprechend einzelnen Fluidspeichern erläutert. Selbstverständlich können auch mehrere solcher Sterilisationskammern und/oder Fluidspeicher miteinander kombiniert werden.

Ausführungsbeispiele der Erfindung werden nachfolgend anhand von Figuren näher erläutert. Es zeigen schematisch:
- Figur 1: eine erfindungsgemäße Vorrichtung in einem Betriebszustand vor Beginn eines Sterilisationsprozesses,
- Figur 2: die Vorrichtung aus Figur 1 in einem weiteren Betriebszustand,
- Figur 3: die Vorrichtung aus Figur 1 in einem weiteren Betriebszustand,
- Figur 4: die Vorrichtung aus Figur 1 in einem weiteren Betriebszustand,
- Figur 5: die Vorrichtung aus Figur 1 in einem weiteren Betriebszustand,
- Figur 6: eine weitere Ausgestaltung der erfindungsgemäßen Vorrichtung in einem weiteren Betriebszustand,
- Figur 7: die Vorrichtung aus Figur 6 in einem weiteren Betriebszustand,
- Figur 8: die Vorrichtung aus Figur 6 in einem weiteren Betriebszustand,
- Figur 9: die Vorrichtung aus Figur 6 in einem weiteren Betriebszustand,
- Figur 10: die Vorrichtung aus Figur 6 in einem weiteren Betriebszustand, und
- Figur 11: die Vorrichtung aus Figur 6 in einem weiteren Betriebszustand.

Soweit nichts anderes angegeben ist, bezeichnen in den Figuren gleiche Bezugszeichen gleiche Gegenstände.

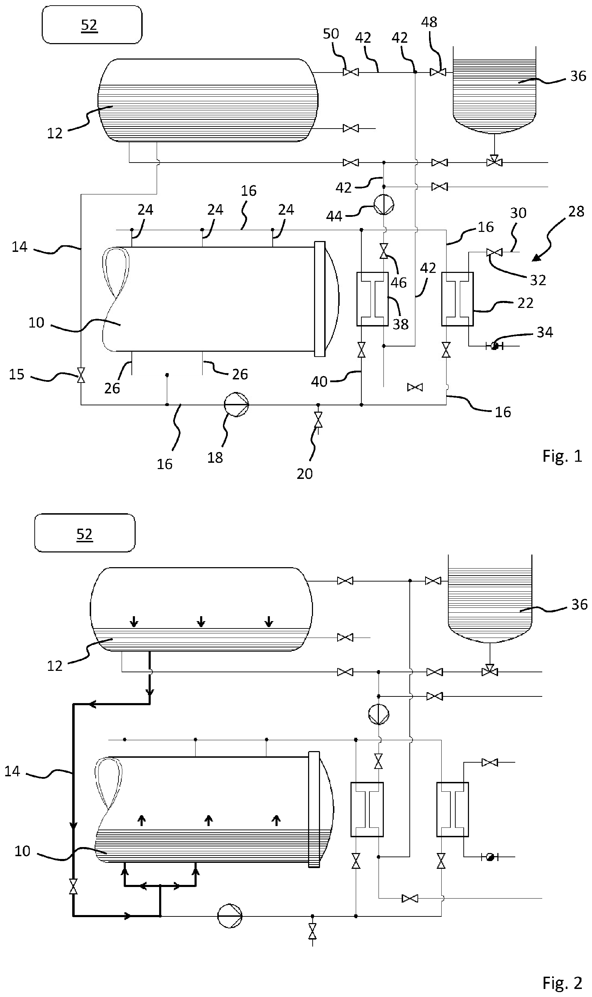

Die in Figur 1 dargestellte Vorrichtung zum Sterilisieren eines Produkts, insbesondere eines Lebensmittelprodukts, umfasst eine Sterilisationskammer 10, bei der es sich um einen Autoklaven handeln kann. Die Vorrichtung umfasst weiterhin einen Heißfluidspeicher 12, der über eine erste Fluidleitung 14, insbesondere zum Überleiten von Heißfluid, mit einer Unterseite der Sterilisationskammer 10 verbunden ist. In der ersten Fluidleitung 14 ist ein steuerbares Ventil 15 angeordnet. Außerdem befindet sich in einer mit der ersten Fluidleitung 14 verbundenen zweiten Fluidleitung 16, insbesondere zum Umwälzen von Fluid, eine Pumpe 18, insbesondere eine Umwälzpumpe 18, sowie ein zu einem Abfluss führendes Abflussventil 20. Über die erste Fluidleitung 14 kann bei geöffnetem Ventil Heißfluid, vorliegend Heißwasser, aus dem Heißfluidspeicher 12 in die Sterilisationskammer 10 geleitet werden.

Die Vorrichtung umfasst außerdem einen ersten Wärmetauscher 22, durch dessen erste Seite die mit einem Einlass 24 und einem Auslass 26 der Sterilisationskammer 10 verbundene zweite Fluidleitung 16 verläuft. Im vorliegenden Beispiel sind an der Oberseite der Sterilisationskammer 10 drei Einlässe 24 und an der Unterseite zwei Auslässe 26 angeordnet. Selbstverständlich sind auch andere Anzahlen von Einlass und/oder Auslass möglich. Die Auslässe 26 dienen beim Befüllen mit Heißfluid aus dem Heißfluidspeicher 12 als Einlässe. Durch die zweite Seite des ersten Wärmetauschers 22 verläuft eine mit einer Heizeinrichtung 28 verbundene dritte Fluidleitung 30, in der ein Ventil 32 und ein Kondensatsammler 34 angeordnet sind. Die Heizeinrichtung 28 kann einen Dampferzeuger umfassen.

Die Vorrichtung umfasst darüber hinaus einen Warmfluidspeicher 36 und einen von dem ersten Wärmetauscher 22 separat ausgebildeten zweiten Wärmetauscher 38, durch dessen erste Seite eine über die zweite Fluidleitung 16 mit dem Einlass 24 und dem Auslass 26 der Sterilisationskammer 10 verbundene vierte Fluidleitung 40 verläuft, und durch dessen zweite Seite eine mit dem Warmfluidspeicher 36 und dem Heißfluidspeicher 12 verbundene fünfte Fluidleitung 42 verläuft. In der fünften Fluidleitung 42 sind eine Pumpe 44 und mehrere Ventile 46, 48, 50 angeordnet, über die wahlweise der Warmfluidspeicher 36 oder der Heißfluidspeicher 12 miteinander oder mit dem zweiten Wärmetauscher 38 verbunden werden können. Schließlich umfasst die Vorrichtung eine Steuereinrichtung 52, die dazu ausgebildet ist, die bei der Vorrichtung vorgesehenen Ventile und Pumpen für den nachfolgend erläuterten Betrieb anzusteuern.

Anhand der Figuren 2 bis 5 sollen die erfindungsgemäße Vorrichtung und das erfindungsgemäße Verfahren zum Sterilisieren eines Produkts, insbesondere eines Lebensmittelprodukts, erläutert werden.

Nachfolgend zu dem in Figur 1 dargestellten Ausgangszustand wird zunächst die Sterilisationskammer 10 über die erste Fluidleitung 14 mit heißem Prozessfluid aus dem Fluidspeicher 12 überflutet. Dabei findet ein Temperaturausgleich zwischen der Sterilisationskammer 10, dem darin enthaltenen Produkt und dem heißen Prozessfluid statt. Bei der erfindungsgemäßen Vorrichtung steuert die Steuereinrichtung 52 die Ventile und Pumpen zum Durchlaufen der diesbezüglich erläuterten Prozessschritte.

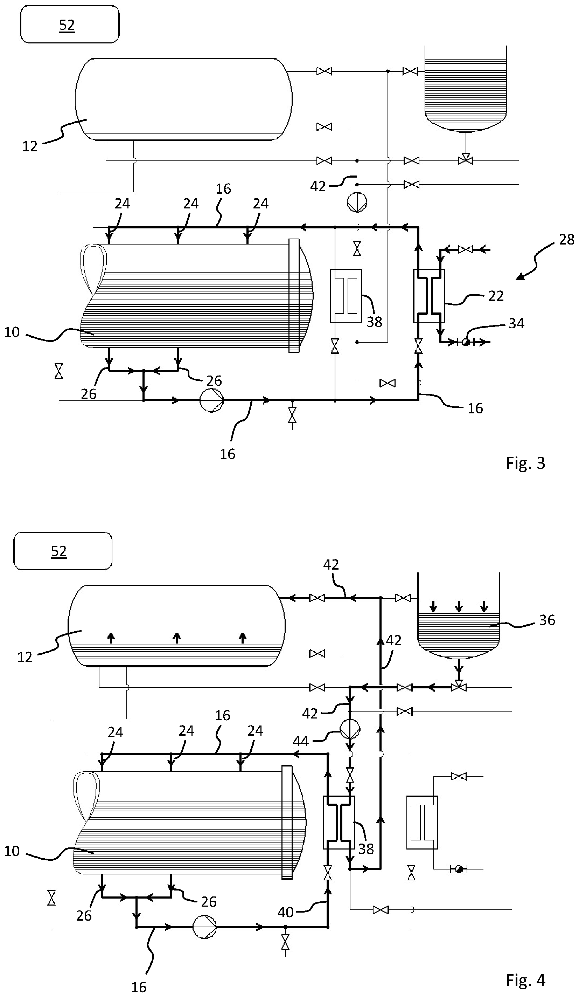

Nachdem die Sterilisationskammer 10 ausreichend mit heißem Prozessfluid aus dem Heißfluidspeicher 12 befüllt wurde, wird die Verbindung zwischen dem Heißfluidspeicher 12 und der Sterilisationskammer10 über die erste Fluidleitung 14 durch Schließen des Ventils 15 unterbrochen. Mittels der Umwälzpumpe 18 wird nachfolgend das in der Sterilisationskammer 10 enthaltene Prozessfluid über die zweite Fluidleitung 16 und über die Auslässe 26 und die Einlässe 24 durch den ersten Wärmetauscher 20 zirkuliert, während gleichzeitig über die Heizeinrichtung 28 beheiztes Fluid, beispielsweise Wasserdampf, durch die zweite Seite des ersten Wärmetauschers 22 geleitet wird, so dass das durch die Sterilisationskammer 10 zirkulierte Prozessfluid auf die für die Sterilisation erforderliche Prozesstemperatur geheizt und auf der Prozesstemperatur gehalten wird. Das an dem Kondensatsammler 34 anfallende Kondensat wird dem Dampferzeuger als Speisefluid wieder zugeführt. Die Zirkulation gemäß Figur 3 wird für die für die Sterilisation vorgesehene Dauer fortgeführt.

Im Anschluss erfolgt der in Figur 4 dargestellte erste Kühlschritt. Dabei wird durch Ansteuern eines entsprechenden Ventils die Verbindung der zweiten Fluidleitung 16 zu dem ersten Wärmetauscher 22 unterbrochen, und stattdessen durch Ansteuern eines in der vierten Fluidleitung 40 angeordneten Ventils das Fluid aus der Sterilisationskammer 10 über die zweite Fluidleitung 16 durch die erste Seite des zweiten Wärmetauschers 38 zirkuliert. Gleichzeitig wird durch Ansteuern eines Ventils und insbesondere der Pumpe 44 Warmfluid aus dem Warmfluidspeicher 36 über die fünfte Fluidleitung 42 durch die zweite Seite des zweiten Wärmetauschers 38 geführt und im Anschluss über die fünfte Fluidleitung 42 dem Heißfluidspeicher zugeleitet. Die Sterilisationskammer 10 wird so weiter gekühlt und das über den zweiten Wärmetauscher 38 indirekt angewärmte Fluid aus dem Warmfluidspeicher in den Heißfluidspeicher gegeben.

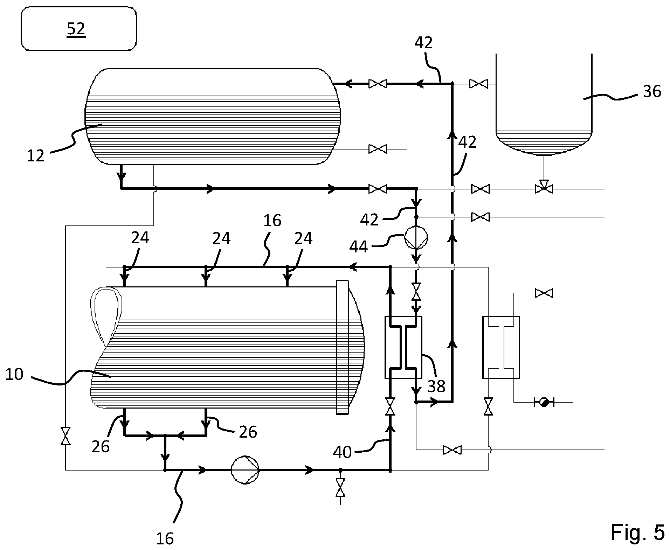

Figur 5 zeigt einen zweiten Kühlschritt, bei dem im Vergleich zu Figur 4 lediglich verändert ist, dass kein Fluid mehr aus dem Warmfluidspeicher in den zweiten Wärmetauscher 38 geführt wird, sondern stattdessen Fluid aus dem Heißfluidspeicher 12 über die fünfte Fluidleitung 42 durch die zweite Seite des zweiten Wärmetauschers 38 zurück in den Heißfluidspeicher 12 zirkuliert wird. Durch diese insbesondere mehrfache Zirkulation wird das bereits angewärmte Fluid des Heißfluidspeichers bis zur minimal möglichen Temperaturspreizung zwischen dem Heißfluidspeicher und der Sterilisationskammer 10 über den zweiten Wärmetauscher 38 aufgewärmt, während gleichzeitig die Sterilisationskammer 10 über das durch diese zirkulierte Fluid weiter abgekühlt wird.

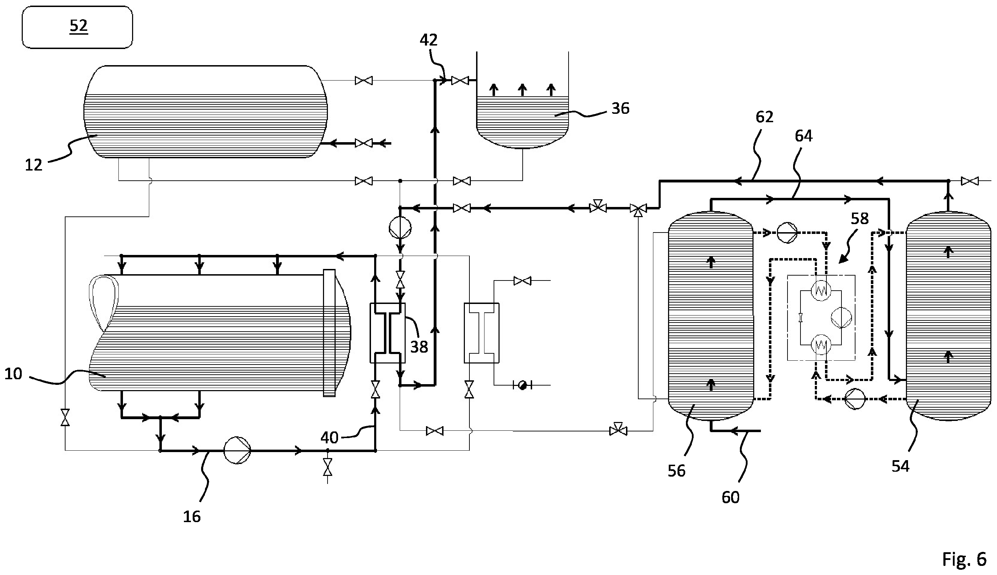

Anhand der Figuren 6 bis 11 wird eine weitere Ausgestaltung der Erfindung erläutert, bei der zusätzlich zu den vorstehend erläuterten Komponenten ein Brauchfluidspeicher 54, insbesondere ein Brauchwasserspeicher 54, und ein Kühlfluidspeicher 56, insbesondere ein Kühlwasserspeicher 56, vorgesehen sind, die über eine Wärmepumpe 58 miteinander verbunden sind. Über eine Kühlfluidversorgung 60 kann der Kühlfluidspeicher 56 mit frischem Kühlfluid, beispielsweise Brunnenwasser, befüllt werden. Der Brauchfluidspeicher 56 ist über eine sechste Fluidleitung 62 mit der fünften Fluidleitung 42 und so mit der zweiten Seite des zweiten Wärmetauschers 38 verbunden. Außerdem sind der Kühlfluidspeicher 56 und der Brauchfluidspeicher 54 über eine siebte Fluidleitung 64 miteinander verbunden, so dass Kühlfluid aus dem Kühlfluidspeicher 56 in den Brauchfluidspeicher 54 übergeleitet werden kann. Die Wärmepumpe 58 kann kontinuierlich Wärme aus dem Kühlfluidspeicher 56 als Wärmequelle in den Brauchfluidspeicher 54 als Wärmesenke bringen.

In dem in Figur 6 dargestellten dritten Kühlschritt wird das in der Sterilisationskammer 10 enthaltene Fluid weiter über die zweite Fluidleitung 16 und die vierte Fluidleitung 40 durch die erste Seite des zweiten Wärmetauschers 38 zirkuliert. Gleichzeitig wird Fluid über die sechste Fluidleitung 62 aus dem Brauchfluidspeicher 54 durch die zweite Seite des zweiten Wärmetauschers 38 geführt und über die fünfte Fluidleitung 42 dem Warmfluidspeicher 36 zugeleitet. Der Brauchfluidspeicher 54 wird durch Überleiten von Kühlfluid aus dem Kühlfluidspeicher 56 durch die siebte Fluidleitung 64 nachgefüllt. Der Kühlfluidspeicher 56 wird wiederum über die Kühlfluidversorgung 60 aufgefüllt.

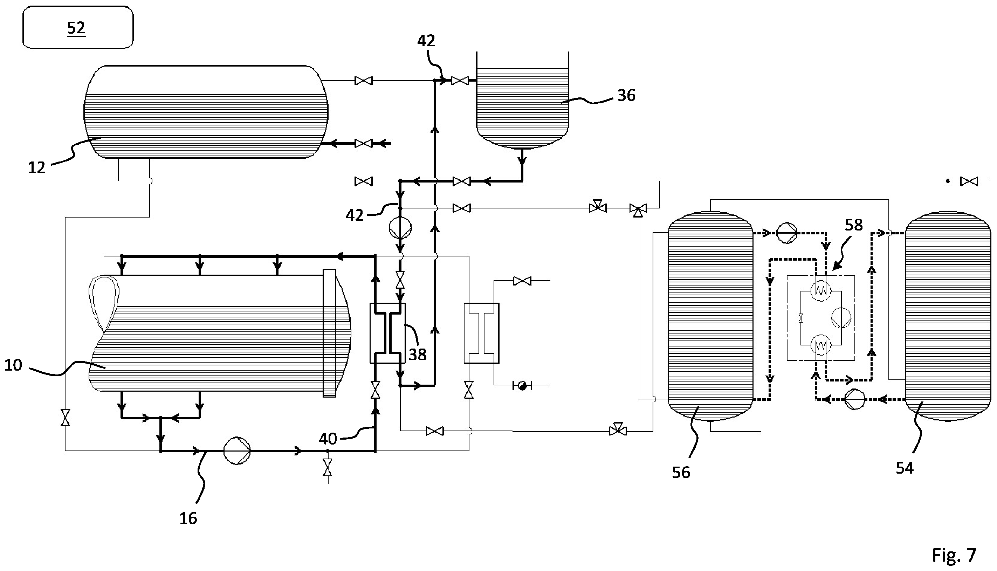

In dem in Figur 7 dargestellten vierten Kühlschritt, bei dem das in der Sterilisationskammer 10 enthaltene Fluid weiter über die zweite Fluidleitung 16 und die vierte Fluidleitung 40 durch die erste Seite des zweiten Wärmetauschers 38 zirkuliert wird, wird Fluid aus dem Warmfluidspeicher 36 über die fünfte Fluidleitung 42 durch die zweite Seite des zweiten Wärmetauschers 38 zurück zum Warmfluidspeicher 36 zirkuliert, bis eine minimal mögliche Temperaturspreizung im zweiten Wärmetauscher 38 zwischen dem Warmfluidspeicher 36 und der Sterilisationskammer 10 erreicht ist.

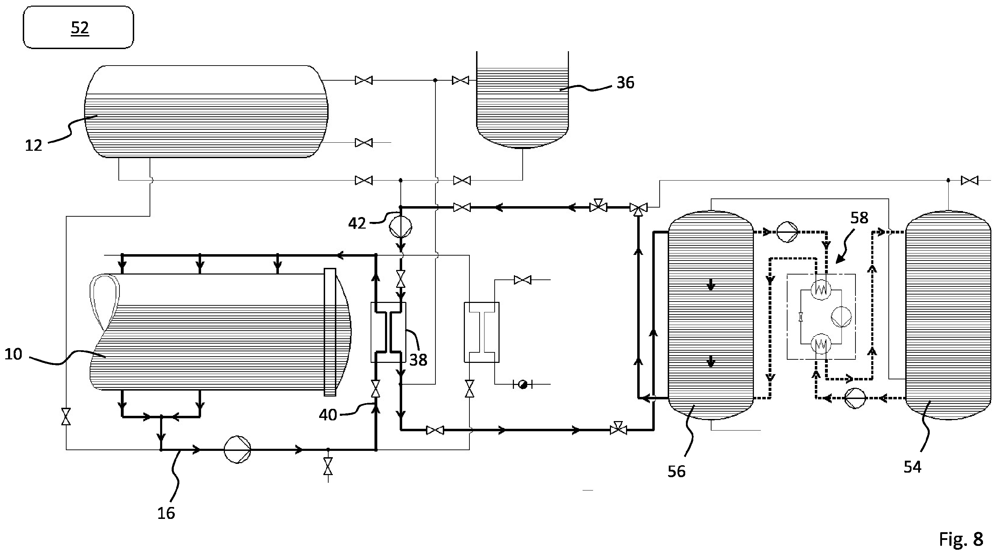

Nachfolgend erfolgt die in Figur 8 dargestellte fünfte und finale Kühlung bis zum Erreichen des Prozessendes, bei dem Kühlfluid aus dem Kühlfluidspeicher 56 über die fünfte Fluidleitung 42 durch die zweite Seite des zweiten Wärmetauschers 38 zurück in den Kühlfluidspeicher 56 zirkuliert wird, während gleichzeitig weiterhin das in der Sterilisationskammer 10 enthaltene Fluid über die zweite Fluidleitung 16 und die vierte Fluidleitung 40 durch die erste Seite des zweiten Wärmetauschers 38 zirkuliert wird. Dieses Zirkulieren erfolgt, bis die Temperatur in der Sterilisationskammer 10 die für das Prozessende vorgesehene Endtemperatur erreicht hat. Während des gesamten Prozesses bringt die Wärmepumpe 58 Wärme vom Kühlfluidspeicher 56 in den Brauchfluidspeicher 54. Durch Pufferung können Einschaltzyklen und die erforderliche Wärmepumpenleistung auf ein Minimum begrenzt werden.

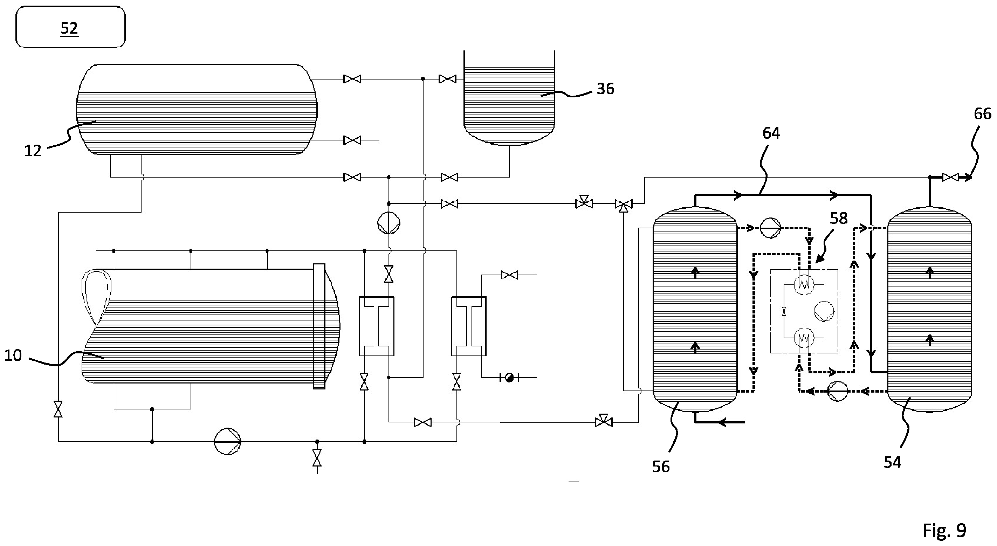

In Figur 9 ist dargestellt, wie nach Ende des Sterilisationsprozesses über die siebte Fluidleitung 64 erwärmtes Kühlfluid aus dem Kühlfluidspeicher 56 in den Brauchfluidspeicher 54 geleitet werden kann, von dem dieses über einen Brauchfluidabfluss 66 einer weiteren Verwendung, beispielsweise zur Reinigung, zugeführt werden kann.

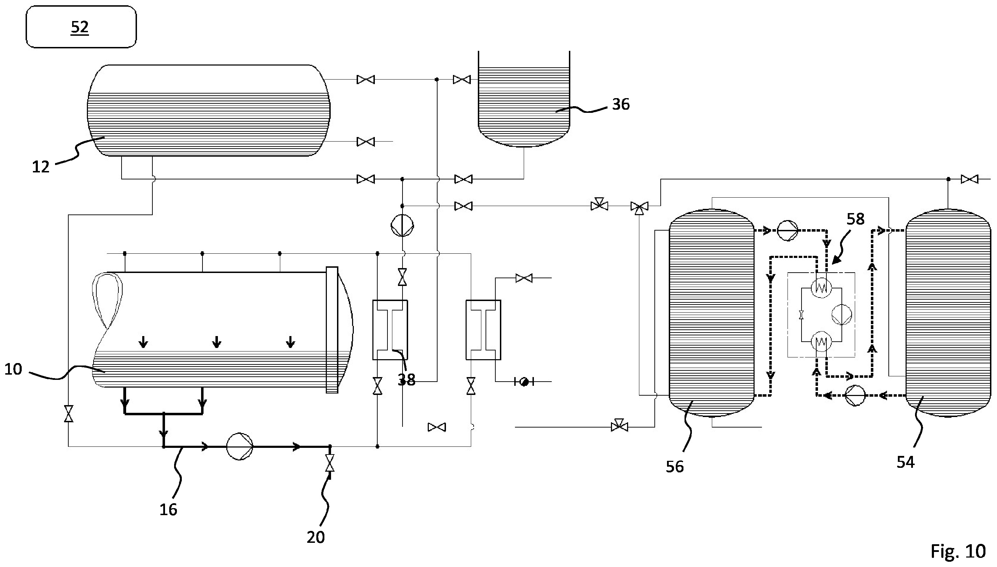

Nachfolgend kann, wie in Figur 10 dargestellt, das Fluid aus der Sterilisationskammer 10, das nicht wieder verwendet werden kann, über die zweite Fluidleitung 16 und den Abfluss 20 abgeführt werden.

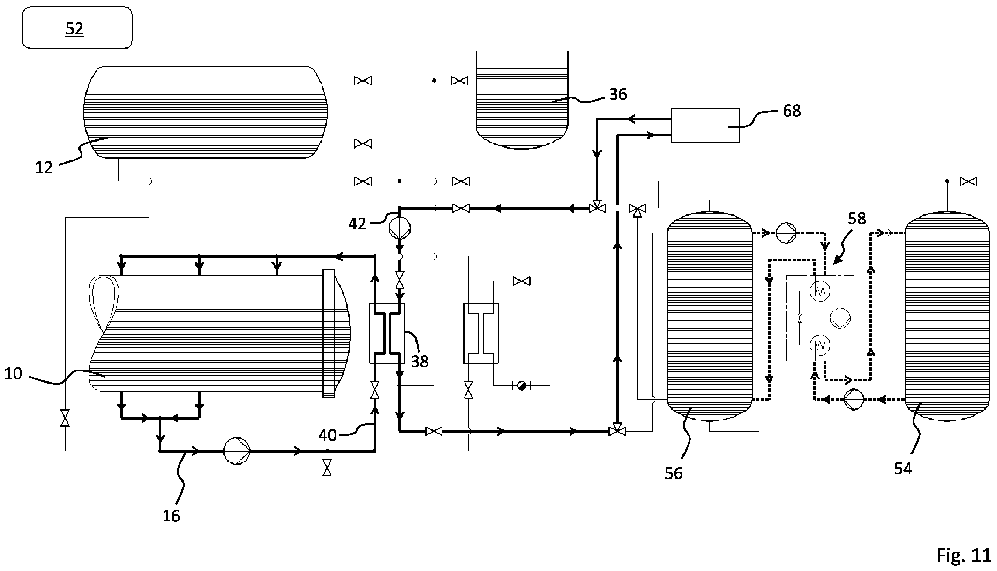

Sofern aufgrund mangelnder Wärmeabnahme durch die vorstehend erläuterten Systeme erforderlich, kann die Kühlung bis zum Prozessende auch durch Zirkulieren von durch eine externe Kühleinrichtung 68 gekühltem Fluid durch die zweite Seite des zweiten Wärmetauschers 38 erfolgen, wie in Figur 11 dargestellt.

Grundsätzlich wird angemerkt, dass die Anzahl von Pufferspeichern und/oder Wärmetauschern auch größer oder kleiner als in den beschriebenen Ausführungsbeispielen sein kann.

### Bezugszeichenliste

- 10: Sterilisationskammer
- 12: Heißfluidspeicher
- 14: Erste Fluidleitung
- 15: Ventil
- 16: Zweite Fluidleitung
- 18: Umwälzpumpe
- 20: Abflussventil
- 22: Erster Wärmetauscher
- 24: Einlass
- 26: Auslass
- 28: Heizeinrichtung
- 30: Dritte Fluidleitung
- 32: Ventil
- 34: Kondensatsammler
- 36: Warmfluidspeicher
- 38: Zweiter Wärmetauscher
- 40: Vierte Fluidleitung
- 42: Fünfte Fluidleitung
- 44: Pumpe
- 46: Ventil
- 48: Ventil
- 50: Ventil
- 52: Steuereinrichtung
- 54: Brauchfluidspeicher
- 56: Kühlfluidspeicher
- 58: Wärmepumpe
- 60: Kühlfluidversorgung
- 62: Sechste Fluidleitung
- 64: Siebte Fluidleitung
- 66: Brauchfluidabfluss
- 68: Externe Kühleinrichtung

## Patentansprüche

1. Vorrichtung zum Sterilisieren eines Produkts, insbesondere eines Lebensmittelprodukts, **gekennzeichnet durch**:
• eine Sterilisationskammer (10) und einen Heißfluidspeicher (12), die über eine erste Fluidleitung (14) miteinander verbunden sind, so dass durch die erste Fluidleitung (14) heißes Fluid aus dem Heißfluidspeicher (12) in die Sterilisationskammer (10) geleitet werden kann,
• einen ersten Wärmetauscher (22), durch dessen erste Seite eine mit einem Einlass (24) und einem Auslass (26) der Sterilisationskammer (10) verbundene zweite Fluidleitung (16) verläuft, und durch dessen zweite Seite eine mit einer Heizeinrichtung (28) verbundene dritte Fluidleitung (30) verläuft,
• einen Warmfluidspeicher (36) und einen zweiten Wärmetauscher (38), durch dessen erste Seite eine mit dem Einlass (24) und dem Auslass (26) der Sterilisationskammer (10) verbundene vierte Fluidleitung (40) verläuft, und durch dessen zweite Seite eine mit dem Warmfluidspeicher (36) und dem Heißfluidspeicher (12) verbundene fünfte Fluidleitung (42) verläuft.

2. Vorrichtung nach Anspruch 1, **dadurch gekennzeichnet, dass** der erste Wärmetauscher (22) und der zweite Wärmetauscher (38) durch einen gemeinsamen Wärmetauscher gebildet sind, oder dass der erste Wärmetauscher (22) und der zweite Wärmetauscher (38) durch separate Wärmetauscher (22, 38) gebildet sind.

3. Vorrichtung nach einem der vorhergehenden Ansprüche, **dadurch gekennzeichnet, dass** sie weiterhin eine Steuereinrichtung (52) umfasst, die dazu ausgebildet ist, folgende Schritte zum Sterilisieren eines Produkts auszuführen:
• in einem Flutungsschritt mindestens ein Ventil und/oder mindestens eine Pumpe so anzusteuern, dass die Sterilisationskammer (10) durch die erste Fluidleitung (14) mit Fluid aus dem Heißfluidspeicher (12) geflutet wird,
• in einem Sterilisationsschritt mindestens ein Ventil und/oder mindestens eine Pumpe so anzusteuern, dass das in der Sterilisationskammer (10) befindliche Fluid über den Einlass (24) und den Auslass (26) der Sterilisationskammer (10) und die zweite Fluidleitung (16) durch die erste Seite des ersten Wärmetauschers (22) zirkuliert wird, und dass durch die Heizeinrichtung (28) geheiztes Fluid durch die dritte Fluidleitung (30) durch die zweite Seite des ersten Wärmetauschers (22) zirkuliert wird, so dass das in der Sterilisationskammer (10) befindliche Fluid im ersten Wärmetauscher (22) geheizt wird,
• in einem ersten Kühlschritt mindestens ein Ventil und/oder mindestens eine Pumpe so anzusteuern, dass das in der Sterilisationskammer (10) befindliche Fluid durch den Einlass (24) und den Auslass (26) der Sterilisationskammer (10) und die vierte Fluidleitung (40) durch die erste Seite des zweiten Wärmetauscher (38) zirkuliert wird, und dass Fluid aus dem Warmfluidspeicher (36) durch die fünfte Fluidleitung (42) und die zweite Seite des zweiten Wärmetauschers (38) in den Heißfluidspeicher (12) geleitet wird, so dass das in der Sterilisationskammer (10) befindliche Fluid im zweiten Wärmetauscher (38) gekühlt wird,
• in einem zweiten Kühlschritt mindestens ein Ventil und/oder mindestens eine Pumpe so anzusteuern, dass das in der Sterilisationskammer (10) befindliche Fluid weiterhin durch den Einlass (24) und Auslass (26) der Sterilisationskammer (10) und die vierte Fluidleitung (40) durch die erste Seite des zweiten Wärmetauschers (38) zirkuliert wird, und dass Fluid aus dem Heißfluidspeicher (12) über einen Einlass und einen Auslass des Heißfluidspeichers (12) durch die fünfte Fluidleitung (42) und die zweite Seite des zweiten Wärmetauschers (38) zirkuliert wird, so dass das in der Sterilisationskammer (10) befindliche Fluid im zweiten Wärmetauscher (38) weiter gekühlt wird.

4. Vorrichtung nach einem der vorhergehenden Ansprüche, **dadurch gekennzeichnet, dass** sie weiterhin einen Brauchfluidspeicher (54) umfasst, der über eine sechste Fluidleitung (62) mit der zweiten Seite des zweiten Wärmetauschers (38) verbunden ist.

5. Vorrichtung nach den Ansprüchen 3 und 4, **dadurch gekennzeichnet, dass** die Steuereinrichtung (52) weiter dazu ausgebildet ist, in einem dritten Kühlschritt mindestens ein Ventil und/oder mindestens eine Pumpe so anzusteuern, dass das in der Sterilisationskammer (10) befindliche Fluid weiterhin durch den Einlass (24) und den Auslass (26) der Sterilisationskammer (10) und die vierte Fluidleitung (40) durch die erste Seite des zweiten Wärmetauschers (38) zirkuliert wird, und dass Brauchfluid aus dem Brauchfluidspeicher (54) über die sechste Fluidleitung (62) durch die zweite Seite des zweiten Wärmetauschers (38) und in den Warmfluidspeicher (36) geleitet wird, so dass das in der Sterilisationskammer (10) befindliche Fluid im zweiten Wärmetauscher (38) weiter gekühlt wird.

6. Vorrichtung nach Anspruch 5, **dadurch gekennzeichnet, dass** die Steuereinrichtung (52) weiter dazu ausgebildet ist, in einem vierten Kühlschritt mindestens ein Ventil und/oder mindestens eine Pumpe so anzusteuern, dass das in der Sterilisationskammer (10) befindliche Fluid weiterhin durch den Einlass (24) und den Auslass (26) der Sterilisationskammer (10) und die vierte Fluidleitung (40) durch die erste Seite des zweiten Wärmetauschers (38) zirkuliert wird, und dass Fluid aus dem Warmfluidspeicher (36) über einen Einlass und einen Auslass des Warmfluidspeichers (36) durch die fünfte Fluidleitung (42) und die zweite Seite des zweiten Wärmetauschers (38) zirkuliert wird, so dass das in der Sterilisationskammer (10) befindliche Fluid im zweiten Wärmetauscher (38) weiter gekühlt wird.

7. Vorrichtung nach einem der Ansprüche 4 bis 6, **dadurch gekennzeichnet, dass** sie weiterhin einen Kühlfluidspeicher (56) umfasst, der über eine Wärmepumpe (58) mit dem Brauchfluidspeicher (54) verbunden ist, und dass der Kühlfluidspeicher (56) mit der sechsten Fluidleitung (62) verbunden ist.

8. Vorrichtung nach Anspruch 7, **dadurch gekennzeichnet, dass** die Steuereinrichtung (52) weiter dazu ausgebildet ist, in einem fünften Kühlschritt mindestens ein Ventil und/oder mindestens eine Pumpe so anzusteuern, dass das in der Sterilisationskammer (10) befindliche Fluid weiterhin durch den Einlass (24) und den Auslass (26) der Sterilisationskammer (10) und die vierte Fluidleitung (40) durch die erste Seite des zweiten Wärmetauschers (38) zirkuliert wird, und dass Kühlfluid aus dem Kühlfluidspeicher (56) über einen Einlass und einen Auslass des Kühlfluidspeichers (56) durch die fünfte Fluidleitung (42) und die zweite Seite des zweiten Wärmetauschers (38) zirkuliert wird, so dass das in der Sterilisationskammer (10) befindliche Fluid im zweiten Wärmetauscher (38) weiter gekühlt wird.

9. Vorrichtung nach einem der Ansprüche 7 oder 8, **dadurch gekennzeichnet, dass** der Kühlfluidspeicher (56) und der Brauchfluidspeicher (54) über eine siebte Fluidleitung (64) miteinander verbunden sind.

10. Vorrichtung nach Anspruch 9, **dadurch gekennzeichnet, dass** die Steuereinrichtung (52) dazu ausgebildet ist, nach dem fünften Kühlschritt mindestens ein Ventil und/oder mindestens eine Pumpe so anzusteuern, dass durch den zweiten Wärmetauscher (38) in dem fünften Kühlschritt erwärmtes Kühlfluid über die siebte Fluidleitung (64) aus dem Kühlfluidspeicher (54) in den Brauchfluidspeicher (56) geleitet wird.

11. Vorrichtung nach einem der vorhergehenden Ansprüche, **dadurch gekennzeichnet, dass** die fünfte Fluidleitung (42) mit einer externen Kühleinrichtung (68) verbunden ist.

12. Verfahren zum Sterilisieren eines Produkts, insbesondere eines Lebensmittelprodukts, **gekennzeichnet durch** die Schritte:
• in einem Flutungsschritt wird eine Sterilisationskammer (10) mit Fluid aus einem Heißfluidspeicher (12) geflutet,
• in einem Sterilisationsschritt wird das in der Sterilisationskammer (10) befindliche Fluid über einen Einlass (24) und einen Auslass (26) der Sterilisationskammer (10) durch eine erste Seite eines ersten Wärmetauschers (22) zirkuliert, und durch eine Heizeinrichtung (28) geheiztes Fluid durch eine zweite Seite des ersten Wärmetauschers (22) zirkuliert, so dass das in der Sterilisationskammer (10) befindliche Fluid im ersten Wärmetauscher (22) geheizt wird,
• in einem ersten Kühlschritt wird das in der Sterilisationskammer (10) befindliche Fluid durch den Einlass (24) und den Auslass (26) der Sterilisationskammer (10) durch die erste Seite des zweiten Wärmetauschers (38) zirkuliert, und Fluid aus einem Warmfluidspeicher (36) durch die zweite Seite des zweiten Wärmetauschers (38) in einen Heißfluidspeicher (12) geleitet, so dass das in der Sterilisationskammer (10) befindliche Fluid im zweiten Wärmetauscher (38) gekühlt wird,
• in einem zweiten Kühlschritt wird das in der Sterilisationskammer (10) befindliche Fluid weiterhin durch den Einlass (24) und Auslass (26) der Sterilisationskammer (10) durch die erste Seite des zweiten Wärmetauschers (38) zirkuliert, und Fluid aus dem Heißfluidspeicher (12) über einen Einlass und einen Auslass des Heißfluidspeichers (12) durch die zweite Seite des zweiten Wärmetauschers (38) zirkuliert, so dass das in der Sterilisationskammer (10) befindliche Fluid im zweiten Wärmetauscher (38) weiter gekühlt wird.

13. Verfahren nach Anspruch 12, **dadurch gekennzeichnet, dass** in einem dritten Kühlschritt das in der Sterilisationskammer (10) befindliche Fluid weiterhin durch den Einlass (24) und den Auslass (26) der Sterilisationskammer (10) durch die erste Seite des zweiten Wärmetauschers (38) zirkuliert wird, und dass Brauchfluid aus einem Brauchfluidspeicher (54) durch die zweite Seite des zweiten Wärmetauschers (38) und in den Warmfluidspeicher (36) geleitet wird, so dass das in der Sterilisationskammer (10) befindliche Fluid im zweiten Wärmetauscher (38) weiter gekühlt wird.

14. Verfahren nach Anspruch 13, **dadurch gekennzeichnet, dass** in einem vierten Kühlschritt das in der Sterilisationskammer (10) befindliche Fluid weiterhin durch den Einlass (24) und den Auslass (26) der Sterilisationskammer (10) und die vierte Fluidleitung (40) durch die erste Seite des zweiten Wärmetauschers (38) zirkuliert wird, und dass Fluid aus dem Warmfluidspeicher (36) über einen Einlass und einen Auslass des Warmfluidspeichers (36) durch die zweite Seite des zweiten Wärmetauschers (38) zirkuliert wird, so dass das in der Sterilisationskammer (10) befindliche Fluid im zweiten Wärmetauscher (38) weiter gekühlt wird.

15. Verfahren nach Anspruch 14, **dadurch gekennzeichnet, dass** in einem fünften Kühlschritt das in der Sterilisationskammer (10) befindliche Fluid weiterhin durch den Einlass (24) und den Auslass (26) der Sterilisationskammer (10) und die vierte Fluidleitung (40) durch die erste Seite des zweiten Wärmetauschers (38) zirkuliert wird, und dass Kühlfluid aus einem Kühlfluidspeicher (56) über einen Einlass und einen Auslass des Kühlfluidspeichers (56) durch die zweite Seite des zweiten Wärmetauschers (38) zirkuliert wird, so dass das in der Sterilisationskammer (10) befindliche Fluid im zweiten Wärmetauscher (38) weiter gekühlt wird.

16. Verfahren nach Anspruch 15, **dadurch gekennzeichnet, dass** nach dem fünften Kühlschritt durch den zweiten Wärmetauscher (38) in dem fünften Kühlschritt erwärmtes Kühlfluid aus dem Kühlfluidspeicher (56) in den Brauchfluidspeicher (54) geleitet wird.

17. Verfahren nach einem der Ansprüche 12 bis 16, **dadurch gekennzeichnet, dass** es mit einer Vorrichtung nach einem der Ansprüche 1 bis 11 ausgeführt wird.
